# EUROPEAN PATENT APPLICATION

(11) **EP 4 462 322 A1**
(43) Date of publication of application: **13.11.2024**
(21) Application number: 24173806.1
(22) Date of filing: 02.05.2024
(51) Int. Cl.: G06N 20/20, G06V 10/82, G06V 20/52

(54) **A METHOD AND A SYSTEM FOR REAL-TIME DETECTION OF ATTACKS ON AI-BASED OBJECT DETECTORS**

(30) Priority: 03.05.2023 US 202363499715 P
(71) Applicant: Deutsche Telekom AG, 53113 Bonn (DE)
(72) Inventor: AVRAHAM, Dan, 84105 Beer-Sheva (IL); SHAPIRA, Avishag, 84105 Beer-Sheva (IL); BITTON, Ron, 84105 Beer-Sheva (IL); SHABTAI, Asaf, 7684200 Hulda (IL); MIMRAN, David, 6215505 Tel Aviv (IL); ELOVICI, Yuval, 7986400 Arugot (IL); BRODT, Oleg, 8471621 Beer-Sheva (IL); LEHMANN, Heiko, 12587 Berlin (DE)
(74) Representative: Vossius & Partner Patentanwälte Rechtsanwälte mbB

(57) **Abstract**

An Al-based method for real-time detection and mitigation of attacks on object detectors being fed by input images acquired by one or more imagers, comprising the steps of mapping normal attributes of the outputs of an ML-model associated with the object detectors, using unsupervised learning; creating an anomaly detection model being capable of identifying adversarial attacks in the form of adversarial patchs, based solely on the outputs of the object detectors and without accessing the object detectors model or any original frames aquired by the one or more imagers; calculating the anomaly score for each object being detected by the ML-model object detectors; comparing the anomaly scores of the detected objects to a preset threshold; protecting the object detectors agaist the attacks by identifying and mitigating the effects of the adversarial patch attacks using the comparison results.

## Description

### Field of the Invention

The present invention relates to the field of cyber security. More particularly, the invention relates to a method and a system for real-time detection of attacks on Al-based object detectors.

### Background for the Invention

Object Detectors (ODs) utilizing Deep Neural-Networks architectures (DNNs). For example, YOLO (a real-time object detection system) and Faster-RCNN (a deep learning model that detects objects in images), are widely used in different real-time applications due to their accuracy and their inference speed. However, DNNs are exposed to different adversarial machine learning attacks, and specifically adversarial patches.

Adversarial Machine Learning (AML) attacks, such as creation of a patch with subtle precalculated perturbations that leads the DNNs to misdetections (i.e., failing to identify an object) [51] or misclassifications (i.e., classifying an object with incorrect class) [8]. These patches can be applied to the target object [51, 60], can be located anywhere in the frame [32, 67], or even be placed on the sensor itself (i.e., the camera lenses) [71]. Existing solutions proposed various methods for detecting adversarial attacks and protecting DNNs from inference mistakes. However, these solutions require access to the model's input (i.e., the image), the model itself (i.e., OD or image classifier) or both.

Many studies have been conducted on adversarial attacks against DNNs that aimed to cause the DNN model to incorrectly classify an object as a different object (a specific different object if targeted, or any other object if the attack is untargeted) [4, 8, 16, 32, 48]. Consequently, adversarial attack detection methods have received attention in the literature.

As presented in Table 1, some of the detection methods focused on image classification (IC) models, while others on object detectors (OD) which is more challenging to implement. This is because unlike classifiers that output one feature vector per image, ODs output a map of vectors, one for each candidate bounding box. Thus, detectors for ODs must be able to consider manipulating objects located in different positions, with different scales and aspect ratios. Table 1 illustrates a comparison of defense mechanisms:

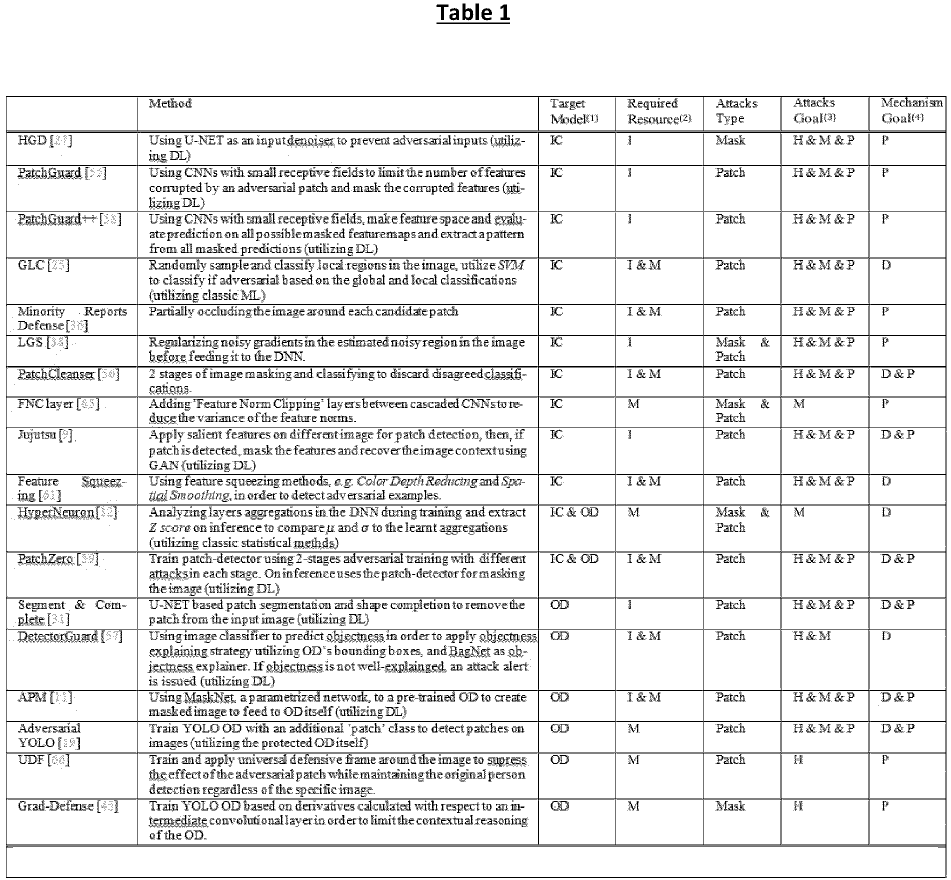

where,
OD - Object Detectors; IC - Image Classifiers; I - Model input (i.e., image); M - Model (i.e., the network of the OD or IC); O - Model's output (i.e., detected bounding boxes and confidence vector); M - Misclassification; H - Hiding objects; P - Adding phantom objects; P - Attack Prevention; D -Attack Detection.

Furthermore, these methods can be categorized by the access required by the detection mechanism. Some detection methods such as [65, 12] need access to the DNN-model (M) to add special layers or analyze the layers' activations on the inspected samples. Other methods require access to the models' inputs/images (I) to analyze [31, 38, 9], manipulate [27, 55, 58, 36, 38, 56, 9] the input, or even use both the input and the model to extract features of adversarial attacks [25].

It is therefore an object of the present invention to provide a method and system for real-time detection of attacks on Al-based object detectors.

It is another object of the present invention to provide a method and system for identifying and mitigating the effects of the adversarial patch attacks.

It is a further object of the present invention to provide a method and system for real-time detection of attacks on Al-based object detectors, which are output-based only, and are model-agnostic adversarial patch detector for ODs.

It is still another object of the present invention to provide a method and system for real-time detection of attacks on Al-based object detectors which leverage a simple, lightweight and scalable ML model.

It is yet another object of the present invention to provide a method and system for real-time detection of attacks on Al-based object detectors which can be applied to object detectors and object trackers, by utilizing previous data for detection rate improvement.

It is a further object of the present invention to provide a method and system for real-time detection of attacks on Al-based object detectors and trackers in smart junctions.

Other objects and advantages of the invention will become apparent as the description proceeds.

### Summary of the Invention

An Al-based method for real-time detection and mitigation of attacks on object detectors being fed by input images acquired by one or more imagers, comprising the steps of:
a) mapping normal attributes of the outputs of an ML-model associated with the object detectors, using unsupervised learning;
b) creating an anomaly detection model being capable of identifying adversarial attacks in the form of adversarial patchs, based solely on the outputs of the object detectors and without accessing the object detectors model or any original frames aquired by the one or more imagers;
c) calculating the anomaly score for each object being detected by the ML-model object detectors;
d) comparing the anomaly scores of the detected objects to a preset threshold; and
e) protecting the object detectors agaist the attacks by identifying and mitigating the effects of the adversarial patch attacks using the comparison results.

The normal attributes of the OD's outputs may be objects' bounding boxes and confidence vectors.

Detection may be performed, based only on the output of the ML-model being the detected bounding boxes and confidence vectors.

The ML-model of the protected Al-based object detector may be the Isolation Forest algorithm.

Protection may be provided to the YOLO object detectors.

Protection may be provided to the StrongSORT object-tracking algorithm.

The imagers may be selected from the group of:
- cameras of traffic systems;
- surveillance cameras in junctions and intersections.

Protection may be provided to YOLO object detectors by:
a) determining candidate's bounding box;
b) determining a objectness score
c) determining classes scores; and
d) for each object's bounding box, assuming correlation between the location of the object within the frame, being relative to the imager, the size of the bounding box of the object, and the objectness and class scores.

The Isolation Forest (*iForest*) algorithm may be used for anomaly detection by:
a) learning the patterns of the outputs of object detectors being related to benign objects in different locations in the frame;
b) inferring if a new object is benign or adversarial by:
   b.1) randomly selecting features; and
   b.2) constructing decision trees to isolate data points, where the height of the tree represents the anomaly score, and the final score is obtained by subtracting
the average height of isolation trees in the ensemble from the data point's isolation tree height.

Detection of attacked objects in a frame may be performed by extracting the following features of benign objects that belongs to a protected class:
- X center - the center of the object's bounding box on the horizontal axis;
- Y center - the center of the object's bounding box on the vertical axis;
- width - the width of the object's bounding box;
- height - the height of the object's bounding box;
- objectness - the OD's confidence that the object inside the bounding box is an object;
- Nc - the object's confidence scores for each possible object class.

The *iForest* model may be trained for a specific object type or class being a protected class, by:
a) using only feature vectors of objects that belongs to the protected class for the training of the model;
b) Using the trained model to detect cases where an adversarial patch is placed on an object of the protected class by:
c) applying the model to objects that are detected by the OD model and that are labeled as any class other than the protected class; and
d) if the iForest model classifies a detected object as legitimate, raising an alert for a potential patch attack.

Anomaly detection may be performed using Frame-wise detection or Sequence-based detection.

### Brief Description of the Drawings

The above and other characteristics and advantages of the invention will be better understood through the following illustrative and non-limitative detailed description of preferred embodiments thereof, with reference to the appended drawings, wherein:
- Fig. 1 illustrates the smart traffic system flow;
- Fig. 2A shows an example of a benign frame with the object detector detections;
- Fig. 2B shows an example of a frame with an attacked object - a car with the adversarial patch;
- Fig. 3 shows an example of dividing the frame captured by the camera into regions; and
- Fig. 4 shows the performance (F₁ score) of frame-based detection and sequence-based detection methods on both J1 and J2 datasets.

### Detailed Description of the Invention

The present invention provides a method and a system for real-time detection of attacks on Artificial intelligence (Al)- based object detectors, that is model-agnostic, does not require access to the model nor the image, and is based solely on the OD's output, unlike conventional methods that perform real-time detection of adversarial attacks against ODs using only the OD's output. The method of the present invention allows a standalone application for OD use cases in real-time on edge technologies. A smart junction use-case is focused, where a car uses an adversarial patch to fool an OD to misclassify it as a bus, like the use-case in [47].

The method of the present invention uses a defense mechanism in the form of Machine Learning (ML)-based detector that can detect targeted label-switch patch attacks, which targets the state-of-the-art one-stage object detection system, YOLO [18, 42, 43]. In this attack, the adversary attempts to cause the OD to classify an object with an adversarial patch as a specific incorrect object type. The proposed defense mechanism does not require access to the model's input (i.e., the image) nor to the model itself, and performs the detection, based only on the model's output, i.e., detected bounding boxes (geometric shapes that enclose or surround an object or a group of objects in a digital image) and confidence vectors. This makes the detection mechanism model-agnostic and applicable to a wide range of object detection systems and applications. In addition, the protected object detector is based on a lightweight ML model, such as the Isolation Forest (an algorithm for data anomaly detection using binary trees), and therefore is very efficient and can be applied in real-time use cases.

The method of the present invention uses unsupervised learning methods to map the normal attributes of the OD's outputs (objects' bounding boxes and confidence vectors) and calculate the anomaly score for each detected object. By comparing the anomaly scores of the detected objects to a preset threshold, it is possible to identify and mitigate the effects of the adversarial patch attacks (Adversarial patch-based attacks aim to mislead a neural network with an intentionally generated noise, which is concentrated in a particular region of an input image).

### Implementation to the YOLO Object Detector:

YOLO's architecture comprises of two components: (a) a backbone network for extracting features from the input image, and (b) three detection heads that process the image's features at three different scales. These components are connected using the Feature Pyramid Network (FPN - a feature extractor designed for a pyramid concept with accuracy and speed in mind. It replaces the feature extractor of detectors like Faster R-CNN and generates multiple feature map layers, or multi-scale feature maps with better quality information than the regular feature pyramid for object detection) [28] topology, where feature maps from different blocks of the backbone are concatenated to feature maps of corresponding sizes in the detection heads.

The sizes of the detection heads (specific components or layers of the neural network architecture that is responsible for a particular task or subtask) are determined by the size of the input image and the network's stride (downsampling factor) - 32, 16, and 8. This allows the network to detect objects of different sizes: the first detection head (with the largest stride) has a broader context, specializing in the detection of large objects, while the smallest one has better resolution and specializes in the detection of small objects. The last layer of each detection head predicts a 3D tensor of size M × M × (4 + 1 + Nc), where M × M is the grid size and (4 + 1 + Nc) encodes three parts:
- Bounding box offsets - four coordinate offsets from a predefined anchor box (a reference bounding box used to predict object locations and shapes during object detection).
- Objectness score - a single value that represents the model's confidence that the bounding box contains an object.
- Class scores - confidence scores (Nc), indicating the presence of specific class categories.

Every cell in the grid predicts three bounding boxes (associated with three predefined anchor boxes), resulting in a 3 ×M ×M × (4 + 1 + Nc) prediction. Since many candidate predictions may overlap and predict the same object, the Non-Maximum Suppression (NMS - is a post-processing technique that is used in object detection tasks to eliminate duplicate detections and select bounding boxes) algorithm is applied to remove redundant predictions using the Intersection over Union (IoU - a performance metric used to evaluate the accuracy of annotation, segmentation, and object detection algorithms. It quantifies the overlap between the predicted bounding box or segmented region and the ground truth bounding box or annotated region from a dataset) value. Two candidates that have the same target class (the outcome to be predicted or explained using an ML model. It is the variable to be estimated or classified, based on the available data) are considered to be overlapping candidates when their loU value is greater than a predefined threshold. The YOLO network is trained on a large dataset of annotated images and uses a divide-and-conquer strategy by dividing the image into cells and assigning each cell the task of identifying objects within its area. This method enables YOLO to obtain high detection accuracy and fast detection.

### Implementation to Real-time Object Tracking

Object tracking is the process of identifying, locating and connecting objects within a video, i.e., a sequence of frames. The object tracker (a computer vision application that detects objects and then tracks their movements in space or across different camera angles. Object tracking can identify and follow multiple objects in an image) usually assigns a unique object ID for each object within the video stream.

It is a crucial task in computer vision with various applications such as surveillance [17, 70], autonomous vehicles [22, 23, 41], and sports analytics [62, 39, 64].

There are several different existing tracking methods, each with its own set of advantages and limitations. Some of the most common methods include Kalman filter [21, 5], Particle filter [14, 3], IoU-based tracking [13, 69], DeepSORT [54], SORT [2], Strong-SORT [15], and Centroid tracking [37].

Kalman filter and Particle filter are mathematical algorithms that use a set of measurements observed over time to estimate the position of an object within the current frame, based on the object's location in previous frames. IoU-based tracking estimates the position of an object within the current frame based on the IoU of the object's bounding box in previous frames. Median Flow, calculates the median of the motion vectors of the pixels using Lucas-Kanade optical flow [34] to estimate the motion of an object and by that, track the object across the frames. Both IoU and Median Flow are robust algorithms that are able to handle large displacements and appearance changes. DeepSORT and SORT are object tracking algorithms that use a combination of deep learning models and Kalman filter-based tracking framework to identify an object within a new frame, based on the object's position in previous frames. Centroid tracking uses the center of mass of the object to track it. In the method of the present invention, the StrongSORT [15] approach for object tracking is used, because it is highly accurate and can be easily integrated within YOLO's pipeline.

### Adversarial Patch

Adversarial attacks on ODs can be categorized by the goal of the attack. Some attacks focused on hiding specific objects, such as stop signs [71], people [60, 51], cars [53, 50], or any object [67, 32] from the OD, while others aimed at causing the system to misclassify an object as another object (any object or a specific object, i.e., target object) [32, 4, 48, 7, 16]. Prior work can also be categorized by the location in which the patch is placed. In some attacks, the patch was placed anywhere in the frame [32, 4, 67], on the sensor [71], or on the object itself [48, 7, 53, 50, 47].

In the present invention, the proposed detection method, using the adversarial patch presented by Shapira et al. [47], is evaluated, which is a targeted misclassification attack, in which the patch is placed on a small part of an object and is simple to apply as a sticker mounted on the object, making the attack realistic and transferable from the digital domain to the real world.

The effectiveness of the defense in the context of smart traffic systems has been evaluated, where the accuracy and reliability of the OD are critical. In this scenario, road cameras are utilized for surveillance in junctions and intersections, and improve traffic flow while prioritizing public transportation and emergency vehicles, and enhance pedestrian safety in real-time. The video streams recorded by the road cameras were analyzed by DL-based ODs to recognize objects, which are then used to oversee and regulate the traffic lights by the smart traffic optimization system. The ability of the proposed method to detect the targeted label-switch patch attack, presented by Shapira et al. [47], was evaluated. The performance of the proposed within different locations (i.e., junctions) in the frame and its transferability between different locations were also analyzed. The experimental results demonstrate the effectiveness of the defense mechanism in detecting and mitigating these attacks and maintaining the accuracy of the OD.

The present invention creates an anomaly detection model that can efficiently identify adversarial attacks in the form of adversarial patch based on these outputs only and without accessing the OD model nor the original frames (images) themselves.

For each candidate, YOLO outputs: (a) the candidate's bounding box (x and y coordinates represent the center of the object, w represents the box's width and h represents the box's height), (b) the objectness score, and (c) the classes scores. The assumption is that there is a correlation between the following properties of an object's bounding box: (1) the location of the object within the frame, which is relative to the observer (i.e. camera), (2) the size of the bounding box of the object, and (3) the objectness and class scores.

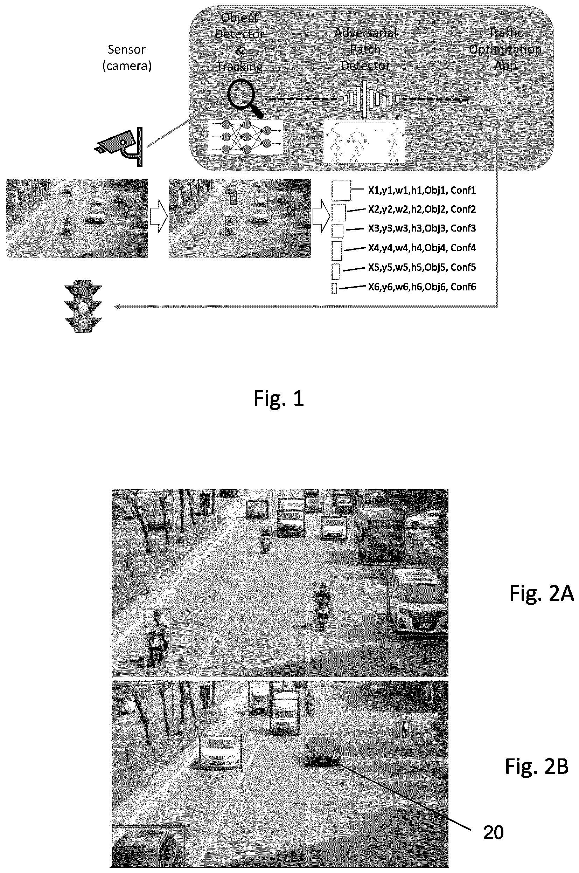

Fig. 1 illustrates the smart traffic system flow, according to an embodiment of the onvention. The camera captures and streams the video frames to the Object Detector (or Object Tracker) that are fed by input images aquired by one or more imagers, such as video or still cameras. The output of the Object Detector is sent to the Adversarial Patch Detector, and benign detected objects are sent to the Traffic Optimization Application for decision-making.

For example, as demonstrated in Figs. 2A-2B, in a traffic control system, the size of the bounding box of a car that is far from the surveillance camera's location will be smaller than the bounding box of a car that is close to the camera. Within the same location in the frame, the size of the bounding box of a bus will be larger than the size of the bounding box of a car or a motorcycle. In addition, one should not expect to see a car object within a public transportation lane.

Fig. 2A shows an example of a benign frame with the object detector detections. Fig. 2B shows an example of a frame with an attacked object - a car 20 with the adversarial patch. The bounding boxes' colors are unique to the object class: car - blue, motorcycle - orange, track - green, bus - pink, person -teal.

### Anomaly Detector

The method of the present invention utilizes the Isolation Forest (*iForest*) algorithm [30] to learn the patterns of the OD's outputs related to benign objects in different locations in the frame, and then infer if a new object is benign (normal) or adversarial (anomalous). *iForest* is a popular unsupervised ML algorithm and is commonly used for anomaly detection [10, 52, 49, 26, 68, 1]. It operates by randomly selecting features and constructing decision trees to isolate data points. The height of the tree represents the anomaly score, and the final score is obtained by subtracting the average height of isolation trees in the ensemble from the data point's isolation tree height. *iForest* is a scalable algorithm that can handle high-dimensional data, does not require any complex parameter tuning, and is very efficient and therefore can be used for real-time applications.

To train the *iForest* model and facilitate the detection of anomalous (attacked) objects in a frame, the following features of benign objects that belongs to the protected class are extracted:
- X center - the center of the object's bounding box on the horizontal axis;
- Y center - the center of the object's bounding box on the vertical axis;
- width - the width of the object's bounding box;
- height - the height of the object's bounding box;
- objectness - the OD's confidence that the object inside the bounding box is an object;
- Nc - the object's confidence scores for each possible class.

The *iForest* model is trained for a specific object type (i.e., class), referred to as a protected class; i.e., for the training of the model, only feature vectors of objects that belongs to the protected class are used. The trained model detects cases where an adversarial patch is placed on an object of the protected class. This is done by applying the model to objects that are detected by the OD model and that are labeled as any class other than the protected class. If the *iForest* model classifies a detected object as legitimate (not anomalous), it raises an alert for a potential patch attack.

{c₁, c₂, ..., cₙ} are the set of possible object types (i.e., classes), and cₚ a protected class, i.e., an object type for which will be trained an *iForest* that will detect cases where a patch is placed on an object of this type. In addition, the *iForest* model trained on feature vectors extracted from an object of type cₚ is denoted by Mₚ. In the detection phase, Mₚ is applied to feature vectors of objects that were detected by the OD and classified as an object type that is not cₚ. In a benign case, i.e., the OD correctly identified an object that is not cₚ, Mp is expected to classify the feature vector of that object as an anomaly (since Mₚ was trained on feature vectors of objects from class cₚ). In a malicious case, i.e., an object of class cₚ with a patch that caused the OD to classify it as another object type, Mₚ is expected to classify the feature vector of that attacked object as normal.

Two modes of operations are proposed for the anomaly detector: Frame-wise detection and Sequence-based detection.

In the Frame-wise detection approach, during inference, the *iForest* model is applied to detected objects belonging to any class that is not the protected class and obtains the anomaly score by the iForest model for these objects.

In the Sequence-based detection approach, an object tracker is used, for example, StrongSort [15], to compute an exponentially weighted average anomaly score for each tracked object. This approach can capture the persistency of the attack throughout the sequence of frames, thereby improving the detection rates and eliminating false alarms. To map the anomaly score to a confidence value on a scale of 0 to 1, the transformation function T (s) = 1 - arccos(s) was used. An object was deemed anomalous if its transformed score exceeded a threshold value calculated to maximize the F₁ score on a validation set.

### Evaluation Setup

Isolation Forest was used in two anomaly detection variations: (1) Frame-wise detection and (2) Sequence-based detection, which also utilizes the object tracker. The implementation of Scikit-Learn 1.0.2 [40] of Isolation Forest was used. As hyperparameters (external configuration variables that data scientists use to manage machine learning model training. Sometimes called model hyperparameters, the hyperparameters are manually set before training a model), 1,023 isolation trees were defined, contamination factor of 0.00001, with bootstrap as sampling method (a resampling procedure that uses data from one sample to generate a sampling distribution by repeatedly taking random samples from the known sample, with replacement). The evaluation was conducted on the state-of-the-art YOLOv5 object detector [20]), pre-trained on the MS- COCO dataset [29].

For the evaluation, two video clips were used as a dataset, taken from two different vehicle surveillance cameras (that are publicly available and downloaded from a large video content provider on the Internet):
- an ~8-minute video clip (denoted by J1) that contains 14,630 frames with 44,406 objects.
- a ∼10-minute video clip (J2) that contains 19,170 frames with 105,015 objects.

Each video clip was divided into a training, validation and testing sets, while 80% of the frames are used in the training phase (where 20% of these frames are used as the validation set), and the 20% remaining frames are used in the evaluation process. To create the datasets, YOLOv5 (including the NMS stage) was applied to each video clip, and pass YOLO's output to the StrongSORT object-tracking algorithm (a powerful object tracking algorithm that provides improved accuracy and robustness in challenging tracking scenarios, using a combination of feature matching and Kalman filtering to handle occlusions and estimate the position of the target object even when it is partially occluded) that allows tracking objects (vehicles) in different frames throughout the video. The targeted label-switch patch [47] was applied on 7% of the cars randomly to create anomalous data.

In each experiment, the model was trained on the training set, and the detection threshold that optimizes the F₁ score has been set, using the validation set, and was applied to the test set.

### Evaluation Metrics

To evaluate the detector's performance the Precision, Recall, F₁ and false positive rate (FPR) metrics were used while considering two types of entities:
**1.** Bounding box - the detection is performed at the bounding box level, i.e., detected objects within frames.
**2.** Object - the detection is performed at the object level; i.e., if at least one bounding box of an object is detected as anomalous, the object itself is marked as anomalous. The bounding boxes in different frames that belong to the same object are identified by the object-tracking algorithm.

The frame based detection results are presented in Table 2, where the detection is performed for each frame individually (without aggregating the anomaly score from previous frames), i.e., Frame-wise detection. The evaluation metrics (Recall, Precision, F₁ score and FPR) are presented for both bounding box level and object-level detection.

**Table 2**

| Train dataset | | | Test dataset | |
|---|---|---|---|---|
| | | | Dataset J1 | Dataset J2 |
| | | | Recall/Percision/*F*₁/FPR. | |
| Bounding box level | Dataset | J1 | 0.935/0.977/0,956/0.0002 | 0.245/1.000/0.394/0.000 |
| | Dataset | J2 | 1.000/0.911/0.954/0.001 | 0.884/0.978/0.929/0.0003 |
| Object level | Dataset | J1 | 1.000/0.81810.90010.016 | 0.667/1.000/0.800/0.000 |
| | Dataset | J2 | 1.000/0.750/0.857/0.024 | 1.000/0.750/0.857/0.017 |

Recall is a metric that measures how often a machine learning model correctly identifies positive instances from all the actual positive samples in the dataset;

Precision is a metric that measures how often a machine learning model correctly predicts the positive class. It is calculated by dividing the number of correct positive predictions (true positives) by the total number of instances the model predicted as positive (both true and false positives);

F₁ score is a measure of the harmonic mean of precision and recall. Commonly used as an evaluation metric in binary and multi-class classification and LLM evaluation, the F₁ score integrates precision and recall into a single metric to gain a better understanding of model performance;

False Positive Rate (FPR) is is calculated as the ratio between the number of negative events wrongly categorized as positive (false positives) and the total number of actual negative events (regardless of classification).

In addition, the results for different training and testing sets are presented, and the ability to infer new junctions without training on them at all is evaluated. Similarly, in Table 3 the sequence-based detection results are presented, when the detection is performed while aggregating the anomaly score from previous frames using the object tracker and by applying the exponentially weighted average on the anomaly scores, i.e., Sequence-based detection.

**Table 3**

| Train dataset | | | Test dataset | |
|---|---|---|---|---|
| | | | Dataset J1 | Dataset J2 |
| | | | Recall/Percision/*F*₁/FPR | |
| Bounding box level | Dataset | J1 | 0,989/1.000/0.994/0.000 | 0.161/1.000/0.278/0.000 |
| | Dataset | J2 | 1.000/0.920/0.959/0.001 | 0.897/1.000/0.946/0.000 |
| Object level | Dataset | J1 | 0.889/1.000/0.941/0.000 | 0.333/1.000/0.500/0.000 |
| | Dataset | J2 | 1.000/0.900/0.947/0.008 | 1.000/1.000/1.000/0.000 |

It can be seen that the frame-based detection detects 93.5%/ 88.4% of the anomalous objects in all the frames, and recognizes 100%/100% of the anomalous objects throughout videos J1 and J2, respectively. The sequence-based detection, which applies to smooth on the anomaly scores of an object, increases the detection rate to 98.9%/89.7% of the anomalous objects in all the frames, and recognizes 100%/100% of the anomalous objects throughout video J1 and J2 respectively while reducing the FPR to 0%. These results demonstrate the efficiency of the two variations of the present invention's model. Specifically, the sequence-based detection improves the detector's success rates, because of the exponential smoothing of the anomaly score which assists in ignoring the OD's detection errors.

It can also be seen that when training the IF model on J2 and testing it on J1, the performance is better than when training on J1 and testing it on J2 for both frame-based and sequence-based method. This is attributed to the fact that J2 is a larger dataset with more data to train on (J2 training set contains 66,892 objects more than twice of J1 training set which consists of 29,773 objects). These results indicate that the method of the present invention is able to learn the patterns of benign objects well enough to generalize these patterns to different locations.

### Detection at different distances from the camera

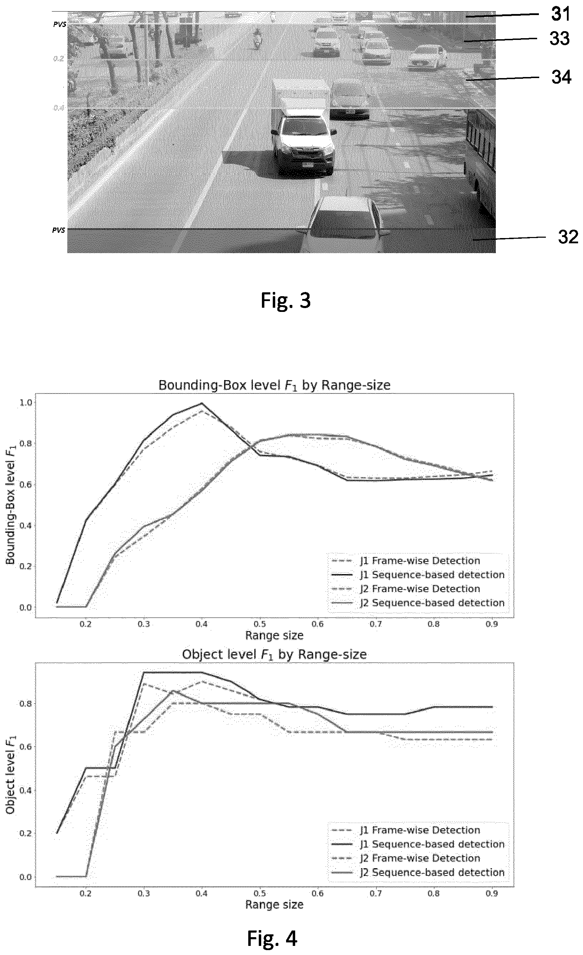

The aim was to understand in which regions in the frame, the detector is able to detect the adversarial attack more accurately. Therefore, the detector was trained on different regions, i.e., different distances from the camera, and the detector was evaluated in these regions. Fig. 3 presents an illustration of two regions, the orange region which covers the top 20% of the frame and the orange + green which covers the top 40% of the frame. In this example, the detection of an adversarial patch at the top of the frame (top regions) is preferred, since it results in early detection of the attack.

Fig. 3 shows an example of dividing the frame captured by the camera into regions. The top and bottom regions 31 and 32 are ignored since they include objects that are partially visible to the camera (entering or exiting vehicles). Region 33 covers the top 20% of the frame and regions 33-34 cover the top 40% of the frame.

Fig. 4 shows the performance (F1 score) of frame-based detection and sequence-based detection methods on both J1 and J2 datasets. From the graphs that show Bounding Box level and Object level F₁ scores for static and sequential approaches, one can see that for both bounding-box and object level detection, the best performance was achieved for the range between 0.35-0.40, except for the bounding box level detection on J2 where the best performance was achieved for the range between 0.50. These results show that the proposed Al-based object detector is able to detect the attack at an easy stage where the object (a car) with the patch is at the top half of the frame.

As various embodiments and examples have been described and illustrated, it should be understood that variations will be apparent to one skilled in the art without departing from the principles herein. Accordingly, the invention is not to be limited to the specific embodiments described and illustrated in the drawings.

### References

**[1]** Wahid Salman Al Farizi, Indriana Hidayah, and Muham- mad Nur Rizal. Isolation forest based anomaly detection: A systematic literature review. In 2021 8th International Conference on Information Technology, Computer and Electrical Engineering (ICITACEE), pages 118-122. IEEE, 2021. 4
**[2]** Alex Bewley, Zongyuan Ge, Lionel Ott, Fabio Ramos, and Ben Upcroft. Simple online and realtime tracking. In 2016 IEEE international conference on image processing (ICIP), pages 3464-3468. IEEE, 2016. 2
**[3]** Michael D Breitenstein, Fabian Reichlin, Bastian Leibe, Es- ther Koller-Meier, and Luc Van Gool. Robust tracking-by-detection using a detector confidence particle filter. In 2009 IEEE 12th International Conference on Computer Vision, pages 1515-1522. IEEE, 2009. 2
**[4]** Tom B Brown, Dandelion Mane', Aurko Roy, Mart'in Abadi, and Justin Gilmer. Adversarial patch. arXiv preprint arXiv:1712.09665, 2017. 2, 3
**[5]** YT Chan, AGC Hu, and JB Plant. A kalman filter based tracking scheme with input estimation. IEEE transactions on Aerospace and Electronic Systems, (2):237-244, 1979. 2
**[6]** Shaobin Chen and Wei Lin. Embedded system real-time vehicle detection based on improved yolo network. In 2019 IEEE 3rd advanced information management, communicates, electronic and automation control conference (IM-CEC), pages 1400-1403. IEEE, 2019. 1
**[7]** Shang-Tse Chen, Cory Cornelius, Jason Martin, and Duen Horng Polo Chau. Shapeshifter: Robust physical adversarial attack on faster rcnn object detector. In Joint European Conference on Machine Learning and Knowledge Discovery in Databases, pages 52-68. Springer, 2018. 2
**[8]** Shang-Tse Chen, Cory Cornelius, Jason Martin, and Duen Horng Polo Chau. Shapeshifter: Robust physical adversarial attack on faster rcnn object detector. In Joint European Conference on Machine Learning and Knowledge Discovery in Databases, pages 52-68. Springer, 2019. 1, 3
**[9]** Zitao Chen, Pritam Dash, and Karthik Pattabiraman. Turning your strength against you: Detecting and mitigating robust and universal adversarial patch attack. arXiv preprint arXiv:2108.05075, 2021. 3, 4
**[10]** Zhangyu Cheng, Chengming Zou, and Jianwei Dong. Outlier detection using isolation forest and local outlier factor. In Proceedings of the conference on research in adaptive and convergent systems, pages 161-168, 2019. 4
**[11]** Ping-Han Chiang, Chi-Shen Chan, and Shan-Hung Wu. Adversarial pixel masking: a defense against physical attacks for pre-trained object detectors. In Proceedings of the 29th ACM International Conference on Multimedia, pages 1856- 1865, 2021. 4
**[12]** Kenneth T Co, Luis Mun~oz-Gonza'lez, Leslie Kanthan, and Emil C Lupu. Real-time detection of practical universal adversarial perturbations. arXiv preprint arXiv:21 05. 07334, 2021. 3, 4
**[13]** Mohana Murali Dasari and Rama Krishna Sai Subrah- manyam Gorthi. Iousiamtrack: Iou guided siamese network for visual object tracking. In 2020 IEEE International Conference on Image Processing (ICIP), pages 2061-2065. IEEE, 2020. 2
**[14]** Pierre Del Moral. Nonlinear filtering: Interacting particle resolution. Comptes Rendus de I'Acade'mie des Sciences-Series I-Mathematics, 325(6):653-658, 1997. 2
**[15]** Yunhao Du, Yang Song, Bo Yang, and Yanyun Zhao. Strongsort: Make deepsort great again. arXiv preprint arXiv.2202.13514, 2022. 2, 5
**[16]** Kevin Eykholt, Ivan Evtimov, Earlence Fernandes, Bo Li, Amir Rahmati, Chaowei Xiao, Atul Prakash, Tadayoshi Kohno, and Dawn Song. Robust physical-world attacks on deep learning visual classification. In Proceedings of the IEEE conference on computer vision and pattern recognition, pages 1625-1634, 2018. 2, 3
**[17]** Gian Luca Foresti. Object recognition and tracking for re- mote video surveillance. IEEE Transactions on circuits and systems for video technology, 9(7):1045-1062, 1999. 2
**[18]** Rachel Huang, Jonathan Pedoeem, and Cuixian Chen. Yolo- lite: a real-time object detection algorithm optimized for non-gpu computers. In 2018 IEEE International Conference on Big Data (Big Data), pages 2503-2510. IEEE, 2018. 1
**[19]** Nan Ji, YanFei Feng, Haidong Xie, Xueshuang Xiang, and Naijin Liu. Adversarial yolo: Defense human detection patch attacks via detecting adversarial patches. arXiv preprint arXiv:2103.08860, 2021. 4
**[20]** Glenn Jocher. ultralytics/yolov5: v6.0 - yolov5n 'nano' mod- els, roboflow integration, tensorflow export, opencv dnn sup- port, oct. 2021. 5
**[21]** Rudolph Emil Kalman. A new approach to linear filtering and prediction problems. 1960. 2
**[22]** Shinpei Kato, EijiroTakeuchi, Yoshio Ishiguro, Yoshiki Ni- nomiya, Kazuya Takeda, and Tsuyoshi Hamada. An open approach to autonomous vehicles. IEEE Micro, 35(6):60- 68, 2015. 2
**[23]** Akisue Kuramoto, Mohammad A Aldibaja, Ryo Yanase, Junya Kameyama, Keisuke Yoneda, and Naoki Suganuma. Mono-camera based 3d object tracking strategy for autonomous vehicles. In 2018 IEEE Intelligent Vehicles Symposium (IV), pages 459-464. IEEE, 2018. 2
**[24]** Rayson Laroca, Evair Severe, Luiz A Zanlorensi, Luiz 5 Oliveira, Gabriel Resende Gonc,alves, William Robson Schwartz, and David Menotti. A robust real-time automatic license plate recognition based on the yolo detector. In 2018 international joint conference on neural networks (ijcnn), pages 1-10. IEEE, 2018. 1
**[25]** Bo Li, Jianghe Xu, Shuang Wu, Shouhong Ding, Jilin Li, and Feiyue Huang. Detecting adversarial patch attacks through global-local consistency. In Proceedings of the 1st International Workshop on Adversarial Learning for Multimedia, pages 35-41, 2021. 3, 4
**[26]** Shutao Li, Kunzhong Zhang, Puhong Duan, and Xudong Kang. Hyperspectral anomaly detection with kernel isolation forest. IEEE Transactions on Geoscience and Remote Sensing, 58(1):319-329, 2019. 4
**[27]** Fangzhou Liao, Ming Liang, Yinpeng Dong, Tianyu Pang, Xiaolin Hu, and Jun Zhu. Defense against adversarial attacks using high-level representation guided denoiser. In Proceedings of the IEEE conference on computer vision and pattern recognition, pages 1778-1787, 2018. 3, 4
**[28]** Tsung-Yi Lin, Piotr Dolla'r, Ross Girshick, Kaiming He, Bharath Hariharan, and Serge Belongie. Feature pyramid networks for object detection. In Proceedings of the IEEE conference on computer vision and pattern recognition, pages 2117-2125, 2017. 2
**[29]** Tsung-Yi Lin, Michael Maire, Serge Belongie, James Hays, Pietro Perona, Deva Ramanan, Piotr Dolla'r, and C Lawrence Zitnick. Microsoft coco: Common objects in context. In European conference on computer vision, pages 740-755. Springer, 2014. 5
**[30]** Fei Tony Liu, Kai Ming Ting, and Zhi-Hua Zhou. Isolation forest. In 2008 eighth ieee international conference on data mining, pages 413-422. IEEE, 2008. 4
**[31]** Jiang Liu, Alexander Levine, Chun Pong Lau, Rama Chel- lappa, and Soheil Feizi. Segment and complete: Defending object detectors against adversarial patch attacks with robust patch detection. In Proceedings of the IEEE/CVF Conference on Computer Vision and Pattern Recognition, pages 14973-14982, 2022. 3, 4
**[32]** Xin Liu, Huanrui Yang, Ziwei Liu, Linghao Song, Hai Li, and Yiran Chen. Dpatch: An adversarial patch attack on object detectors. arXiv preprint arXiv:1806.02299, 2018. 1, 2, 3
**[33]** Junyan Lu, Chi Ma, Li Li, Xiaoyan Xing, Yong Zhang, Zhi- gang Wang, and Jiuwei Xu. A vehicle detection method for aerial image based on yolo. Journal of Computer and Communications, 6(11):98-107, 2018. 1
**[34]** Bruce D Lucas and Takeo Kanade. An iterative image registration technique with an application to stereo vision. In IJCAI'81: 7th international joint conference on Artificial intelligence, volume 2, pages 674-679, 1981. 2
**[35]** Madhusri Maity, Sriparna Banerjee, and Sheli Sinha Chaudhuri. Faster rcnn and yolo based vehicle detection: A survey. In 2021 5th International Conference on Computing Methodologies and Communication (ICCMC), pages 1442- 1447. IEEE, 2021. 1
**[36]** Michael McCoyd, Won Park, Steven Chen, Neil Shah, Ryan Roggenkemper, Minjune Hwang, Jason Xinyu Liu, and David Wagner. Minority reports defense: Defending against adversarial patches. In International Conference on Applied Cryptography and Network Security, pages 564-582. Springer, 2020. 3, 4
**[37]** Jacinto C Nascimento, Arnaldo J Abrantes, and Jorge S Mar- ques. An algorithm for centroid-based tracking of moving objects. In 1999 IEEE International Conference on Acoustics, Speech, and Signal Processing. Proceedings. ICASSP99 (Cat. No. 99CH36258), volume 6, pages 3305-3308. IEEE, 1999. 2
**[38]** Muzammal Naseer, Salman Khan, and Fatih Porikli. Local gradients smoothing: Defense against localized adversarial attacks. In 2019 IEEE Winter Conference on Applications of Computer Vision (WACV), pages 1300-1307. IEEE, 2019. 3, 4
**[39]** Rafael Mart'in Nieto and Jose' Mar'ia Mart'inez Sa'nchez. An automatic system for sports analytics in multi-camera tennis videos. In 2013 10th IEEE International Conference on Advanced Video and Signal Based Surveillance, pages 438-442. IEEE, 2013. 2
**[40]** F. Pedregosa, G. Varoquaux, A. Gramfort, V. Michel, B. Thirion, O. Grisel, M. Blondel, P. Prettenhofer, R. Weiss, V. Dubourg, J. Vanderplas, A. Passes, D. Cournapeau, M. Brucher, M. Perrot, and E. Duchesnay. Scikit-learn: Machine learning in Python. Journal of Machine Learning Research, 12:2825-2830, 2011. 5
**[41]** Akshay Rangesh and Mohan Manubhai Trivedi. No blind spots: Full-surround multi-object tracking for autonomous vehicles using cameras and lidars. IEEE Transactions on Intelligent Vehicles, 4(4):588-599, 2019. 2
**[42]** Joseph Redmon, Santosh Divvala, Ross Girshick, and Ali Farhadi. You only look once: Unified, real-time object detection. In Proceedings of the IEEE conference on computer vision and pattern recognition, pages 779-788, 2016. 1, 2
**[43]** Joseph Redmon and Ali Farhadi. Yolov3: An incremental improvement. arXiv preprint arXiv:1804.02767, 2018. 2
**[44]** Shaoqing Ren, Kaiming He, Ross Girshick, and Jian Sun. Faster rcnn: Towards real-time object detection with region proposal networks. Advances in neural information processing systems, 28, 2015. 1
**[45]** Aniruddha Saha, Akshayvarun Subramanya, Koninika Patil, and Hamed Pirsiavash. Role of spatial context in adversarial robustness for object detection. In Proceedings of the IEEE/CVF Conference on Computer Vision and Pattern Recognition Workshops, pages 784-785, 2020. 4
**[46]** Mohammad Javad Shafiee, Brendan Chywl, Francis Li, and Alexander Wong. Fast yolo: A fast you only look once system for real-time embedded object detection in video. arXiv preprint arXiv:1709.05943, 2017. 1
**[47]** Avishag Shapira, Ron Bitton, Dan Avraham, Alon Zolfi, Yuval Elovici, and Asaf Shabtai. Attacking object detector using a universal targeted label-switch patch. arXiv preprint arXiv:2211.08859, 2022. 1, 2, 3, 6
**[48]** Chawin Sitawarin, Arjun Nitin Bhagoji, Arsalan Mosenia, Prateek Mittal, and Mung Chiang. Rogue signs: Deceiving traffic sign recognition with malicious ads and logos. arXiv preprint arXiv:1801.02780, 2018. 2, 3
**[49]** Li Sun, Steven Versteeg, Serdar Boztas, and Asha Rao. Detecting anomalous user behavior using an extended isolation forest algorithm: an enterprise case study. arXiv preprint arXiv:1609.06676, 2016. 4
**[50]** Naufal Suryanto, Yongsu Kim, Hyoeun Kang, Harashta Tatimma Larasati, Youngyeo Yun, Thi-Thu-Huong Le, Hunmin Yang, Se-Yoon Oh, and Howon Kim. Dta: Physical camouflage attacks using differentiable transformation network. In Proceedings of the IEEE/CVF Conference on Computer Vision and Pattern Recognition, pages 15305- 15314, 2022. 2
**[51]** Simen Thys, Wiebe Van Ranst, and Toon Goedeme'. Fooling automated surveillance cameras: adversarial patches to attack person detection. In Proceedings of the IEEE/CVF conference on computer vision and pattern recognition workshops, pages 0-0, 2019. 1, 2
**[52]** Maurras Ulbricht Togbe, Mariam Barry, Aliou Boly, Yousra Chabchoub, Raja Chiky, Jacob Montiel, and Vinh-Thuy Tran. Anomaly detection for data streams based on isolation forest using scikit-multiflow. In Computational Science and Its Applications-ICCSA 2020: 20th International Conference, Cagliari, Italy, July 1-4, 2020, Proceedings, Part IV 20, pages 15-30. Springer, 2020. 4
**[53]** Jiakai Wang, Aishan Liu, Zixin Yin, Shunchang Liu, Shiyu Tang, and Xianglong Liu. Dual attention suppression attack: Generate adversarial camouflage in physical world. In Proceedings of the IEEE/CVF Conference on Computer Vision and Pattern Recognition, pages 8565-8574, 2021. 2
**[54]** Nicolai Wojke, Alex Bewley, and Dietrich Paulus. Simple online and real-time tracking with a deep association metric. In 2017 IEEE international conference on image processing (ICIP), pages 3645-3649. IEEE, 2017. 2
**[55]** Chong Xiang, Arjun Nitin Bhagoji, Vikash Sehwag, and Prateek Mittal. {PatchGuard}: A provably robust defense against adversarial patches via small receptive fields and masking. In 30th USENIX Security Symposium (USENIX Security 21), pages 2237-2254, 2021. 3, 4
**[56]** Chong Xiang, Saeed Mahloujifar, and Prateek Mittal. Patchcleanser: Certifiably robust defense against adversarial patches for any image classifier. arXiv preprint arXiv:2108.09135, 2021. 3, 4
**[57]** Chong Xiang and Prateek Mittal. Detectorguard: Provably securing object detectors against localized patch-hiding attacks. In Proceedings of the 2021 ACM SIGSAC Conference on Computer and Communications Security, pages 3177- 3196, 2021. 4
**[58]** Chong Xiang and Prateek Mittal. Patchguard++: Efficient provable attack detection against adversarial patches. arXiv preprint arXiv:2104.12609, 2021. 3, 4
**[59]** Ke Xu, Yao Xiao, Zhaoheng Zheng, Kaijie Cai, and Ram Nevatia. Patchzero: Defending against adversarial patch attacks by detecting and zeroing the patch. In Proceedings of the IEEE/CVF Winter Conference on Applications of Computer Vision, pages 4632-4641, 2023. 4
**[60]** Kaidi Xu, Gaoyuan Zhang, Sijia Liu, Quanfu Fan, Mengshu Sun, Hongge Chen, Pin-Yu Chen, Yanzhi Wang, and Xue Lin. Adversarial t-shirt! evading person detectors in a physical world. In European conference on computer vision, pages 665-681. Springer, 2020. 1, 2
**[61]** Weilin Xu, David Evans, and Yanjun Qi. Feature squeez-ing: Detecting adversarial examples in deep neural networks. arXiv preprint arXiv:1704.01155, 2017. 4
**[62]** Yinda Xu and Yonggang Peng. Real-time possessing relationship detection for sports analytics. In 2020 39th Chinese Control Conference (CCC), pages 7373-7378. IEEE, 2020. 2
**[63]** Zhi Xu, Haochen Shi, Ning Li, Chao Xiang, and Huiyu Zhou. Vehicle detection under uav based on optimal dense yolo method. In 2018 5th International Conference on Systems and Informatics (ICSAI), pages 407-411. IEEE, 2018. 1
**[64]** Young Yoon, Heesu Hwang, Yongjun Choi, Minbeom Joo, Hyeyoon Oh, Insun Park, Keon-Hee Lee, and Jin-Ha Hwang. Analyzing basketball movements and pass relationships us- ing realtime object tracking techniques based on deep learn- ing. IEEE Access, 7:56564-56576, 2019. 2
**[65]** Cheng Yu, Jiansheng Chen, Youze Xue, Yuyang Liu, Weitao Wan, Jiayu Bao, and Huimin Ma. Defending against uni- versal adversarial patches by clipping feature norms. In Proceedings of the IEEE/CVF International Conference on Computer Vision, pages 16434-16442, 2021. 3, 4
**[66]** Youngjoon Yu, Hong Joo Lee, Hakmin Lee, and Yong Man Ro. Defending against person hiding adversarial patch attack with a universal white frame. arXiv preprint arXiv:2204.13004, 2022. 4
**[67]** Yusheng Zhao, Huanqian Yan, and Xingxing Wei. Object hider: Adversarial patch attack against object detectors. arXiv preprint arXiv:2010.14974, 2020. 1, 2
**[68]** Shisheng Zhong, Song Fu, Lin Lin, Xuyun Fu, Zhiquan Cui, and Rui Wang. A novel unsupervised anomaly detection for gas turbine using isolation forest. In 2019 IEEE International Conference on Prognostics and Health Management (ICPHM), pages 1-6. IEEE, 2019. 4
**[69]** Lifang Zhou, Yu He, Weisheng Li, Jianxun Mi, and Bangjun Lei. lou-guided siamese region proposal network for realtime visual tracking. Neurocomputing, 462:544-554, 2021.
**[70]** Junda Zhu, Yuanwei Lao, and Yuan F Zheng. Object tracking in structured environments for video surveillance applications. IEEE transactions on circuits and systems for video technology, 20(2):223-235, 2009. 2
**[71]** Alon Zolfi, Moshe Kravchik, Yuval Elovici, and Asaf Shab- tai. The translucent patch: A physical and universal attack on object detectors. In Proceedings of the IEEE/CVF Con- ference on Computer Vision and Pattern Recognition, pages 15232-15241, 2021. 1, 2

## Claims

1. An Al-based method for real-time detection and mitigation of attacks on object detectors being fed by input images aquired by one or more imagers, comprising:
a) mapping normal attributes of the outputs of an ML-model associated with said object detectors, using unsupervised learning;
b) creating an anomaly detection model being capable of identifying adversarial attacks in the form of adversarial patchs, based solely on the outputs of said object detectors and without accessing the object detectors model or any original frames aquired by said one or more imagers;
c) calculating the anomaly score for each object being detected by said ML-model object detectors;
d) comparing the anomaly scores of the detected objects to a preset threshold; and
e) protecting said object detectors agaist said attacks by identifying and mitigating the effects of the adversarial patch attacks using the comparison results.

2. A method according to claim 1, wherein the normal attributes of the OD's outputs are objects' bounding boxes and confidence vectors.

3. A method according to claim 1, or 2, wherein detection is performed, based only on the output of the ML-model being the detected bounding boxes and confidence vectors.

4. A method according to claim 1, 2, or 3, wherein the ML-model of the protected Al-based object detector is the Isolation Forest algorithm.

5. A method according to any one of claims 1 to 4, wherein protection is provided to the YOLO object detectors.

6. A method according to any one of claims 1 to 5, wherein protection is provided to the StrongSORT object-tracking algorithm.

7. A method according to any one of claims 1 to 6, wherein the imagers are selected from the group of:
- cameras of traffic systems;
- surveillance cameras in junctions and intersections.

8. A method according to claim 6, wherein protection is provided to YOLO object detectors by:
a) determining candidate's bounding box;
b) determining a objectness score
c) determining classes scores; and
d) for each object's bounding box, assuming correlation between the location of the object within the frame, being relative to the imager, the size of the bounding box of the object, and the objectness and class scores.

9. A method according to any one of claims 1 to 8, wherein the Isolation Forest (*iForest*) algorithm is used for anomaly detection by:
a) learning the patterns of the outputs of object detectors being related to benign objects in different locations in the frame;
b) inferring if a new object is benign or adversarial by:
b.1) randomly selecting features; and
b.2) constructing decision trees to isolate data points, where the height of the tree represents the anomaly score, and the final score is obtained by subtracting the average height of isolation trees in the ensemble from the data point's isolation tree height.

10. A method according to any one of claims 1 to 9, wherein detection of attacked objects in a frame is performed by extracting the following features of benign objects that belongs to a protected class:
- X center - the center of the object's bounding box on the horizontal axis;
- Y center - the center of the object's bounding box on the vertical axis;
- width - the width of the object's bounding box;
- height - the height of the object's bounding box;
- objectness - the OD's confidence that the object inside the bounding box is an object;
- Nc - the object's confidence scores for each possible object class.

11. A method according to claim 9, wherein the *iForest* model is trained for a specific object type or class being a protected class, by:
a) using only feature vectors of objects that belongs to the protected class for the training of the model;
b) Using the trained model to detect cases where an adversarial patch is placed on an object of the protected class by:
c) applying the model to objects that are detected by the OD model and that are labeled as any class other than the protected class; and
d) if the iForest model classifies a detected object as legitimate, raising an alert for a potential patch attack.

12. A method according to claim 9, wherein anomaly detection is performed using Frame-wise detection or Sequence-based detection.
